# EUROPEAN PATENT APPLICATION

(11) **EP 1 858 017 A1**
(43) Date of publication of application: **21.11.2007**
(21) Application number: 07100042.6
(22) Date of filing: 03.01.2007
(51) Int. Cl.: G11B 27/022

(54) **Image processing apparatus and file reproduce method**

(30) Priority: 29.03.2006 JP 2006092148
(71) Applicant: KABUSHIKI KAISHA TOSHIBA, Tokyo 105-8001 (JP)
(72) Inventor: Takao, Yuji Toshiba Corporation, Minato-ku Tokyo (JP)
(74) Representative: Henkel, Feiler & Hänzel

(57) **Abstract**

According to one embodiment, there is provided an image processing apparatus including: a signal reception unit that receives an external video signal; a storage medium that stores the video signal as a video file; a type determination unit that analyzes the video file and determines a type of each video sections included in the video file; a file creation unit that collects the video sections having a same type with one another to create a typed video file including the video sections having the same type; and a reproduction unit that reproduces the video file and the typed video file

## Description

### BACKGROUND

### 1. Field

One embodiment of the invention relates to an edit and reproduce method of a video file and, more particular, relates to an image processing apparatus applied with a video classification method for divided files of a video file of a program containing a commercial message (CM) and a file reproduce method.

### 2. Description of the Related Art

As a related art, for example, Japanese Patent Application Publication (KOKAI) No. 2002-165176 discloses a program recorder for recording detailed information about a CM inserted between programs at the same time as recording the programs from a video distribution source such as a TV.

According to the program recorder, the record position of a CM, the record position of the next CM, and detailed information of CMs are recorded in record information. Therefore, by reading the record information, the program recorder can reproduce only CMs, search for CM, generate video including only CMs .

### SUMMARY

According to the program recorder in the related art, however, CM information is generated and collected in real time during recording a program and information is recorded in program information and thus processing execution needs to be specified before recording and processing is impossible for already recorded video information and video information recorded with any other apparatus. To search for CM information, users have to access record information for checking the content and can not identify the CM information only with the file name of record information, therefore it is inconvenient for searching.

The invention has been made in view of the above circumstances and provides an image processing apparatus, and file reproduce method. According to an aspect of the invention, the image processing apparatus applied with a video classification method. By the method, the image processing apparatus can perform processing concerning CM reproducing for post-recorded video information and determine the content of post-processed video information based on the file name or metadata.

According to another aspect of the invention, there is provided an image processing apparatus including: a signal reception unit that receives an external video signal; a storage medium that stores the video signal as a video file; a type determination unit that analyzes the video file and determines a type of each video sections included in the video file; a file creation unit that collects the video sections having a same type with one another to create a typed video file including the video sections having the same type; and a reproduction unit that reproduces the video file and the typed video file.

According to further aspect of the invention, there is provided a file reproduce method including: receiving an external video signal; storing a video file provided based on the video signal on a storage medium; analyzing the video file and determining that a type of each video sections included in the video file is a program main part or a commercial message; collecting the video sections having a same type with one another to create a main part file including the video sections having the program main part and a commercial message file including the video sections having the commercial message type; and reproducing at least one of the main par file and the commercial message file when the video file is instructed to be reproduced.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.

FIG. 1 is an exemplary schematic drawing of an image processing apparatus according to a first embodiment of the invention;

FIG. 2 is an exemplary schematic block diagram of the image processing apparatus according to the first embodiment of the invention;

FIG. 3 is an exemplary schematic drawing to show the configuration and processing to a video file in the first embodiment of the invention;

FIG. 4 is an exemplary schematic drawing to show the configuration and processing to a video file according to a second embodiment of the invention;

FIG. 5 is an exemplary schematic drawing to show the configuration and processing to a video file according to a third embodiment of the invention;

FIG. 6 is an exemplary schematic drawing to show processing to a video file according to a fourth embodiment of the invention; and

FIG. 7 is an exemplary schematic drawing to show processing to a video file according to a fifth embodiment of the invention.

### DETAILED DESCRIPTION

Various embodiments according to the invention will be described hereinafter with reference to the accompanying drawings. In general, according to one embodiment of the invention, there is provided an image processing apparatus including: a signal reception unit that receives an external video signal; a storage medium that stores the video signal as a video file; a type determination unit that analyzes the video file and determines a type of each video sections included in the video file; a file creation unit that collects the video sections having a same type with one another to create a typed video file including the video sections having the same type; and a reproduction unit that reproduces the video file and the typed video file.

### First embodiment

### (Configuration of image processing apparatus)

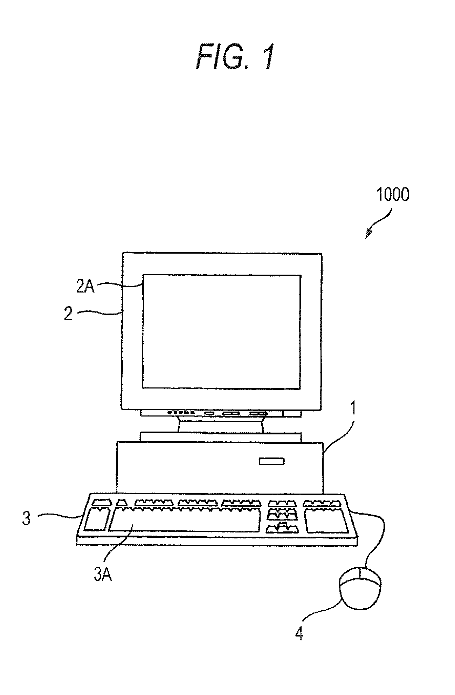

FIG. 1 is an exemplary schematic drawing of an image processing apparatus according to a first embodiment of the invention.

An image processing apparatus 1000 has a main unit 1 including electronic components such as a CPU (Central Processing Unit) and an HDD (Hard Disk Drive), an image display unit 2 having a display screen 2A for displaying text, an image, etc., a character input unit 3 having input keys 3A of character keys, function keys, etc., and a mouse 4 as a pointing device.

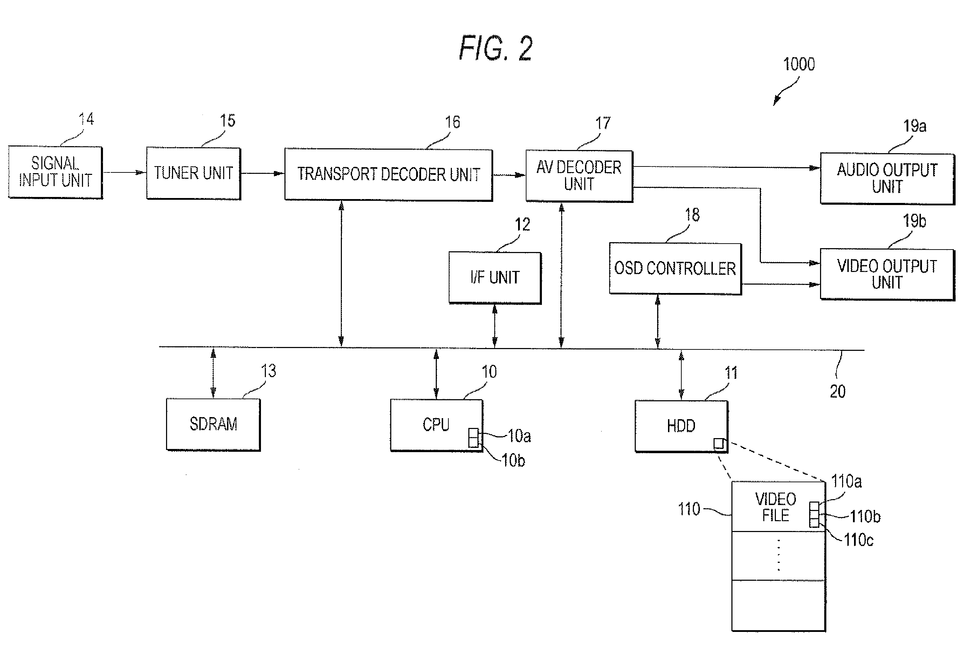

FIG. 2 is an exemplary schematic block diagram of the image processing apparatus according to the first embodiment of the invention.

The image processing apparatus 1000 has a CPU 10 for controlling these units, an HDD 11 for storing programs and data of files, etc., an interface (I/F) unit 12 connected to the character input unit 3 and the mouse 4 for transmitting signals based on operation of the character input unit 3 and the mouse 4 to the units, and SDRAM 13 for temporarily storing data at processing of the units. The units in the image processing apparatus 1000 are connected by a bus 20.

The image processing apparatus 1000 also has a signal input unit 14 for receiving a digital broadcast signal from an external video distribution source, for example, a tuner unit 15 for demodulating the reception signal, a transport decoder unit 16 for transmitting a communication signal received from the tuner unit 15 to an AV decoder unit 17 for each packet, an OSD controller 18 for displaying text information concerning video setting, an audio output unit 19a for transmitting audio output to the outside, and a video output unit 19b for combining the video output and the OSD information and outputting the result to the image display unit 2.

The CPU 10 has a file creation unit 10a for receiving video information from the AV decoder unit 17 and storing the video information as a video file 110 on the HDD 11. The video file 110 includes audio data 110a, video data 110b, and metadata 110c. The metadata 110c includes detailed information of the video file, icon display information, etc.

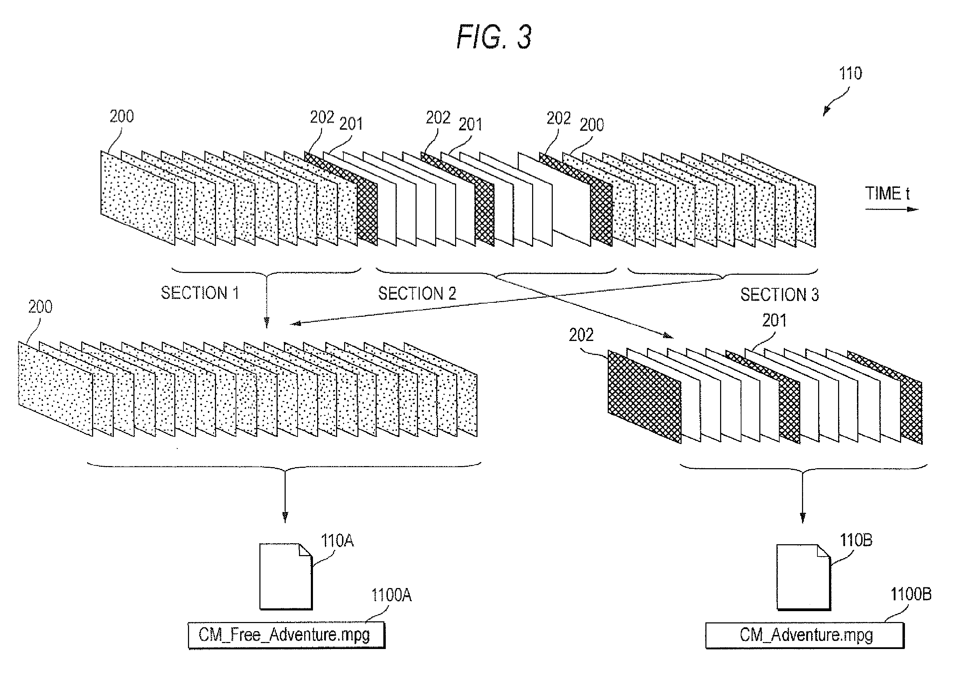

FIG. 3 is an exemplary schematic drawing to show the configuration and processing to a video file in the first embodiment of the invention.

The video file 110 has frames arranged in time sequence in the direction of time t as shown in FIG. 3, and includes main part frames 200 containing the content of the main part of a program, CM frames 201 containing the content of a CM, and black frames 202 between the CM frames 201 or between the main part frame 200 and the CM frame 201 and generally formed of a single color.

### (Operation)

The operation of the image processing apparatus 1000 according to the first embodiment of the invention will be discussed with reference to FIGS. 1 to 4.

If the user executes operation of CM dividing for the already recorded video file 110, a black frame recognition unit 10b of the CPU 10 recognizes a black frame 202, determines main part frames 200 and CM frames 201 based on the insertion point of the black frame 202, and recognizes that sections 1 and 3 are the main part of a program and section 2 is CM.

The file creation unit 10a newly creates a main part file 110A including information obtained by collecting the sections 1 and 3 including the main part frames 200. Also, the file creation unit 10a applies a main part file name 1100A of "CM_Free_Adventure.mpg" to the main part file 110A.

The file creation unit 10a newly creates a CM file 110B including information of the section 2 including the CM frames 201 and the black frames 202. Also, the file creation unit 10a applies a CM file name 1100B of "CM_Adventure.mpg" to the CM file 110B.

### (Advantages of the first embodiment)

According to the embodiment described above, the CM section is identified by recognizing the black frame 202, so that processing can be executed for already recorded video files.

The main part and CM are separated into different files and a character string is added to the top of the original file name, respectively, like "CM_Free_orignal file name" and "CM_orignal file name", whereby the content can be determined based on the file name without referencing the file content. When a plurality of main part files and CM files exist, the files are sorted according to the file names, whereby only the main part files and only the CM files can be extracted and management of the video files is simplified.

According to the embodiment described above, the video file is divided into different files according to the content of each video section and file names in accordance with the types are applied to the files, so that the files can be well managed and can be viewed efficiently.

The black frame 202 is a frame generally formed of a single color and the color is not limited. It may be recognized by detecting any desired pattern on the frame. The method is not limited to the frame analyzing method and the frame may be recognized by analyzing an audio signal and detecting a silent part; any method may be adopted.

### Second embodiment

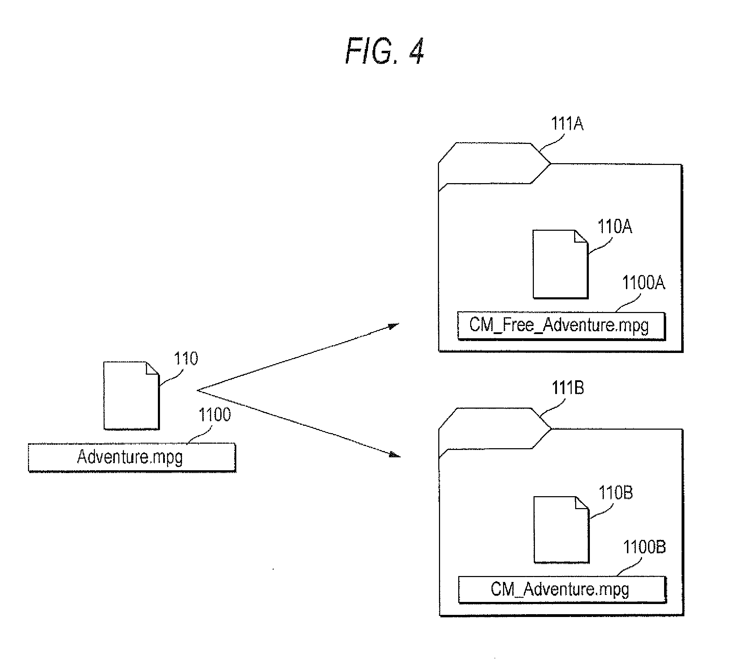

FIG. 4 is an exemplary schematic drawing to show the configuration and processing to a video file according to a second embodiment of the invention. In the description to follow, components identical with or similar to those of the first embodiment are denoted by the same reference numerals.

A main part directory 111A has a plurality of main part files. A CM directory 111B has a plurality of CM files.

### (Operation)

The configuration and processing to a video file in the second embodiment of the invention will be discussed with reference to FIG. 4 and other accompanying drawings.

When the user executes operation of dividing for an already recorded video file 110, a black frame recognition unit 10b of a CPU 10 recognizes a black frame 202, and a file creation unit 10a creates a main part file 110A and a CM file 110B based on the insertion point of the black frame 202.

A main part file name 1100A of "CM_Free_Adventure.mpg" is applied to the main part file 110A and the main part file 110A is stored in the main part directory 111A.

A CM file name 1100B of "CM_Adventure.mpg" is applied to the CM file 110B and the CM file 110B is stored in the CM directory 111B.

### (Advantages of the second embodiment)

According to the embodiment described above, the files are stored in different directories for each type of video, so that only the files of any desired type can be worked on and the file management property according to the type is enhanced.

Since original video file name 1100 is applied to a part of the main part file name 1100A and a part of the CM file name 1100B, even when the video file 110, the main part file 110A, and the CM file 110B exist in different directories, the files are easily associated with each other.

### Third embodiment

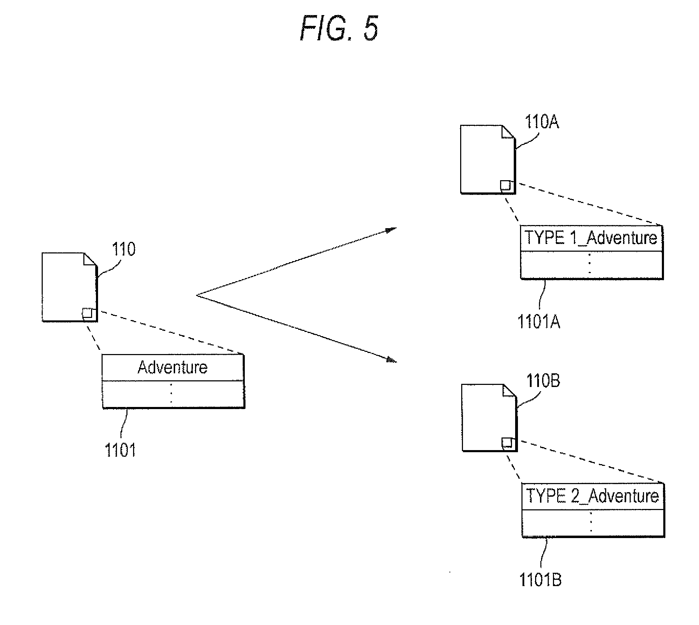

FIG. 5 is an exemplary schematic drawing to show the configuration and processing to a video file according to a third embodiment of the invention.

### (Operation)

The configuration and processing to a video file according to the third embodiment of the invention will be discussed with reference to FIG. 5 and other accompanying drawings.

When the user executes operation of dividing for an already recorded video file 110, a black frame recognition unit 10b of a CPU 10 recognizes a black frame 202, and a file creation unit 10a creates a main part file 110A and a CM file 110B based on the insertion point of the black frame 202.

Metadata 1101A of "type 1_Adventure"is added to the main part file 110A.

Metadata 1101B of "type 2_Adventure" is added to the CM file 110B .

### (Advantages of the third embodiment)

According to the embodiment described above, the metadata in accordance with the type is added to the main part file 110A and the CM file 110B, whereby the video type of file can be determined using a metadata viewer, a search can be well made for files using the metadata viewer, and the files can be viewed efficiently.

The metadata to be added may be a program title. At this time, the main part file 110A and the CM file 110B may be classified, for example, by applying "M_" to the program title like "M_Adventure" (main part file 110A) and applying "C_" to the program title like "C_Adventure" (CM file 110B).

When the number of characters of metadata is limited for reasons of a reproduce system or when it takes much time in processing because the number of characters exceeds a value, the last part of the metadata is deleted as many characters as the number of applied characters. When the number of characters of the program title is four or less, the title may be applied directly without adding any characters.

### Fourth embodiment

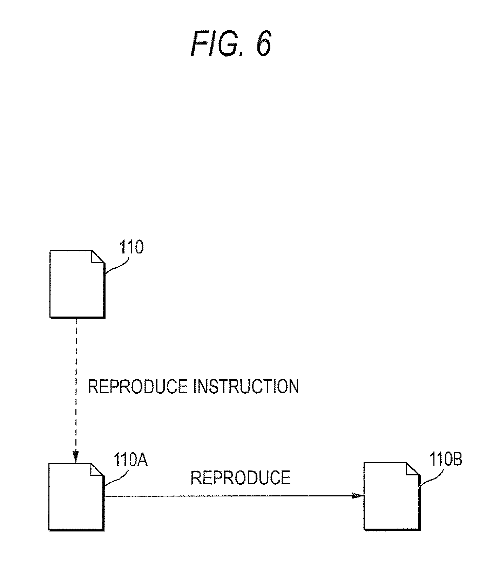

FIG. 6 is an exemplary schematic drawing to show processing to a video file according to a fourth embodiment of the invention.

### (Operation)

The configuration and processing to a video file according to the fourth embodiment of the invention will be discussed with reference to FIG. 6 and other accompanying drawings.

When the user executes operation of dividing for an already recorded video file 110, a black frame recognition unit 10b of a CPU 10 recognizes a black frame 202, and a file creation unit 10a creates a main part file 110A and a CM file 110B based on the insertion point of the black frame 202.

When the user reproduces the video file 110, the main part file 110A is reproduced and then the CM file 110B is reproduced successively.

### (Advantages of the fourth embodiment)

According to the embodiment described above, the program is not interrupted by CM and can be viewed as if CM were skipped, and CM information can also be checked after the main part is viewed.

The user may set the reproduce order so as to first reproduce the CM file 110B and then reproduce the main part file 110A. Only the CM file 110B may be reproduced.

### Fifth embodiment

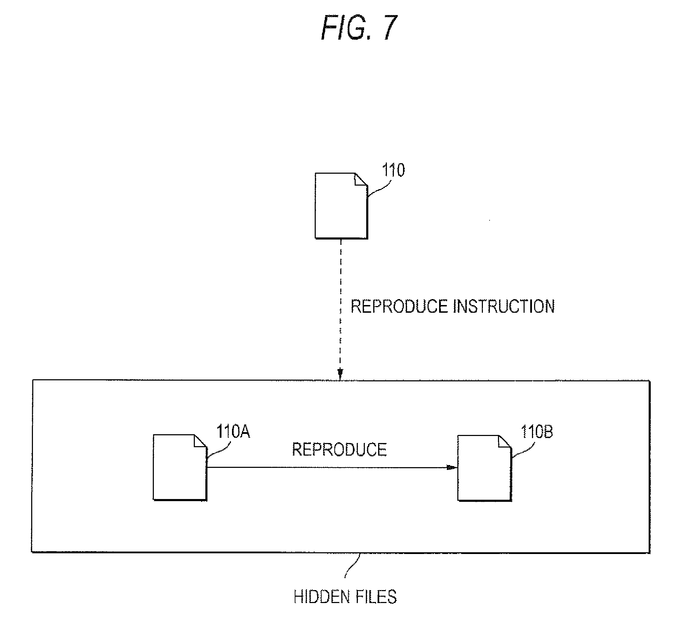

FIG. 7 is an exemplary schematic drawing to show processing to a video file according to a fifth embodiment of the invention.

### (Operation)

The configuration and processing to a video file according to the fifth embodiment of the invention will be discussed with reference to FIG. 7 and other accompanying drawings.

When the user executes operation of dividing for an already recorded video file 110, a black frame recognition unit 10b of a CPU 10 recognizes a black frame 202, and a file creation unit 10a creates a main part file 110A and a CM file 110B based on the insertion point of the black frame 202.

The main part file 110A and the CM file 110B are stored as hidden files and are hidden from the user.

When the user reproduces one video file 110, automatically only the main part file 110A is reproduced.

### (Advantages of the fifth embodiment)

According to the embodiment described above, the main part file 110A and the CM file 110B are hidden from the user as hidden files, whereby management labor and time caused by an increase in the number of files resulting from the dividing processing can be decreased.

The video file 110 of the original file is presented to the user and when reproduce operation is performed, only the main part file 110A is reproduced, whereby the user can see the original metadata not subjected to change and can view video as if CM were skipped.

The user may be allowed to set the reproduce order and combination of the main part file 110A and the CM file 110B as desired.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. An image processing apparatus comprising:
a signal reception unit that receives an external video signal;
a storage medium that stores the video signal as a video file;
a type determination unit that analyzes the video file and determines a type of each video sections included in the video file;
a file creation unit that collects the video sections having a same type with one another to create a typed video file including the video sections having the same type; and
a reproduction unit that reproduces the video file and the typed video file.

2. The- image processing apparatus according to claim 1, further comprising a file name applying unit that applies a file name to the typed video file, the file name including a character string in accordance with the type of the video sections included in the typed video file and a file name of the video file.

3. The image processing apparatus according to claim 2, wherein the character string is arranged in front of the file name of the video file in the file name of the typed video.

4. The image processing apparatus according to claim 1, further comprising a classification unit that classifies the typed video file to store the typed video file in a corresponding directory provided for each type of the video sections.

5. The image processing apparatus according to claim 2, wherein the type of each video sections includes a program main part and a commercial message.

6. The image processing apparatus according to claim 1, further comprising a metadata adding unit that adds metadata to the typed video file, the metadata including a character string in accordance with the type of video sections included in the typed video file and at least a part of metadata of the video file added as additional information to the video file.

7. The image processing apparatus according to claim 6, wherein the character string is arranged in front of the part of the metadata of the video file, the part of the metadata of the video file being deleted the last part in accordance with the number of characters of the character string.

8. The image processing apparatus according to claim 6, wherein when the number of characters of the character string is four or less, the metadata adding unit adds the metadata of the video file as the metadata of the typed video file.

9. The image processing apparatus according to claim 6, wherein the type of the video sections includes a program main part and a commercial message.

10. The image processing apparatus according to claim 6, wherein the metadata of the video file includes a program title.

11. A file reproduce method comprising:
receiving an external video signal;
storing a video file provided based on the video signal on a storage medium;
analyzing the video file and determining that a type of each video sections included in the video file is a program main part or a commercial message;
collecting the video sections having a same type with one another to create a main part file including the video sections having the program main part and a commercial message file including the video sections having the commercial message; and
reproducing at least one of the main part file and the commercial message file when the video file is instructed to be reproduced.

12. The file reproduce method according to claim 11, wherein the reproducing step reproduces the main part file, and thereafter, reproduces the commercial message file.

13. The file reproduce method according to claim 11,
wherein the main part file and the commercial message file are hidden files, and
wherein the reproducing step reproduces the main part file.
